# EUROPEAN PATENT SPECIFICATION

(11) **EP 3 479 080 B1**
(45) Date of publication and mention of the grant of the patent: **11.08.2021**
(21) Application number: 17737752.0
(22) Date of filing: 30.06.2017
(51) Int. Cl.: G01F 23/296

(54) **MONITORING A PRODUCT LEVEL IN A CONTAINER**
ÜBERWACHUNG EINES PRODUKTNIVEAUS IN EINEM BEHÄLTER
SURVEILLANCE D'UN NIVEAU DE PRODUIT DANS UN CONTENANT

(30) Priority: 01.07.2016 ES 201630904
(43) Date of publication of application: 08.05.2019
(73) Proprietor: Serviglp, S.L., 08008 Barcelona (ES)
(72) Inventor: MARTÍN RUIZ, Antonio Ricardo, 08027 Barcelona (ES)
(74) Representative: ZBM Patents - Zea, Barlocci & Markvardsen
(86) International application number: PCT/EP2017/066383
(87) International publication number: WO 2018/002363

(56) References cited:
- EP-B1- 1 250 574
- WO-A1-2013/013395
- WO-A1-2014/136071
- WO-A1-2015/153768
- WO-A2-2016/042395
- US-A- 5 568 449
- US-A1- 2009 019 929
- US-A1- 2010 180 701
- US-A1- 2015 046 298
- US-B2- 7 533 703

## Description

The present disclosure relates to a method for monitoring a product level in a container. Additionally, it also refers to a system and computer program suitable for carrying out the method.

### BACKGROUND

Containers storing certain products, e.g. LPG (Liquefied Petroleum Gas) cylinders, such as butane cylinders, have been known for many years.

Because of the impossibility of knowing a product level in the container given the nature of these containers and the product they store (containers are usually made of metallic materials due to the type of product they store and the way the product is stored - normally pressurized liquids or liquefied gases), sensor devices to sense the product level stored in this type of containers have been developed over the years. Some of them require access to the interior of the container, while others are totally external, for example: the ultrasonic-based sensor devices.

One of the disadvantages of some of these sensor devices is that they only measure a product level in the container at the request of the user, so it is not possible to predict when the product will be finished, in order to perform a product order in time.

Other sensor devices do have the ability to send a product level in the container to an external system (for example, to a computer system of a supplier/distributor), either through a wired or wireless communications network.

The main problem of these sensor devices is that, when the communications network is a wired network, the presence of wires is cumbersome, in either domestic or industrial uses.

On the other hand, when the communications network is wireless, an important energy consumption is caused and the battery of the device runs out of power continuously (therefore, the device stops monitoring the product level in the container) or the battery has to be recharged very often (which requires the user to be continuously aware of whether the device runs out of power, which is not always possible, especially if the user is not at or near the location of the container). Alternatively, there is the possibility of using external power supply but, definitely, this option is not always viable in certain locations of the LPG containers.

Patent document WO 2013/013395 A1 discloses a monitoring system based on an ultrasonic sensor with a guide member located between said sensor and the tank for deviating the ultrasonic beams. The sensor is mounted on a side wall of the rectangular tank. No communications means are provided.

Consequently, there is a need for a system that at least partially solves the above-mentioned problems.

### SUMMARY

The invention is set out in the appended set of claims.

In a first aspect, a method is provided for monitoring a product level in a container having a spherical bottom. The method may comprise:
- Obtaining a product level in the container using a sensor device of the product level;
- Automatically sending data related to at least one of the obtained product levels in the container to at least one external system through a communications network,
   wherein the sensor device is ultrasound-based and is arranged on a part of the spherical bottom of the container, and an element is arranged between the sensor device and the container, wherein said element is configured to cause a change of direction of the emission or reception beam of the signal from the ultrasound-based sensor.

This way, a method is provided that allows obtaining (either automatically or manually) a product level in the container and sending it automatically to an external system for its management. This management may be related to simply providing information (the data related to the product level, e.g. the product level itself) to the user or providing information to the supplier/distributor of the product or to the producer thereof to e.g. processing the information by "Big Data" and thus providing results that are useful for the supplier/distributor or the producer, such as consumption maps per geographical area, correlation of consumption with weather, etc.

On the other hand, it is important to note that, for each performed reading, it is not necessary to send data related to the product level in the container, i.e. it is possible to establish conditions for sending or not the data related to the product level. Thus, the sending of this data may be established when, for example, the product level is below a pre-established threshold, to generate a purchase order of the product. This purchase order may be generated from the system that executes the method, i.e. it is the system itself that determines that the level is below the threshold or from the external system, based on the data it receives.

By configuration, the monitoring system may always be in a "sleep" state, in which the energy consumption is practically zero or very low. Periodically, the monitoring system "wakes up", measures the product level in the container, decides whether to send the data to the external system (which may be in the cloud), and go back to sleep.

With respect to the external system, it may be, for example, one of the following:
- A system associated with a user, such as a mobile device (for example, a smartphone or a tablet). This system may be configured to only display data to the user through a suitable interface (e.g. the product level in the container) or it may be configured to process the data and, for example, to automatically generate product purchase orders to the supplier/distributor, or to generate an interface to the user for acceptance or not of the order generation. In the latter case, the user's experience and knowledge (for example, the user has knowledge of how much product will be consumed in a more or less immediate future) may be suitable for deciding to order a product or not;
- A system associated with a supplier/distributor or a producer of the product, such as a computer system (for example, a cloud computing system). This system may process the received data. In case the received data is a purchase order, the system may process it and manage the sending of additional product to the user.

As discussed above, in some examples, the method may comprise:
- Determining whether the obtained product level in the container is below a pre-established threshold value;
wherein automatically sending data related to at least one of the obtained product levels in the container to at least one first external system through a communications network comprises:
- Automatically sending data related to the obtained product level in the container to the at least one external system through the communications network when the product level in the container is determined to be below the pre-established threshold.

According to some examples, the data related to the obtained product level in the container may comprise data related to a product purchase order to a supplier/distributor. In this case, it is the system executing the method itself which determines whether the obtained product level is below the threshold value.

In some examples, the container may be a cylinder for storing pressurized liquid or liquefied gas and the data related to a product purchase order to a supplier/distributor may comprise a purchase order of at least one cylinder which stores pressurized liquid or liquefied gas.

In some examples the container may be a tank for storing liquid, liquefied gas or pressurized liquid, and wherein the data related to a product purchase order to a supplier/distributor may comprise a purchase order of liquid, liquefied gas or pressurized liquid stored by the tank.

On the other hand, the data related to the obtained product level in the container may comprise the obtained product level in the container.

According to some examples, the communications network may be a communications network for the Internet of Things, which may be selected from, for example, at least one of the following: Sigfox, LoRA, NB-IoT.

With the use of a communications network for the Internet of Things, the system may be a long-lasting system (wherein battery charging is not necessary) because this type of wireless networks sends data at a very slow speed (usually below 5 kbps), are long range networks (up to 10km from the gateway) and the very low energy consumption makes very long battery life (between five to 10 years).

According to a second aspect, a computer program is provided. This computer program may comprise program instructions for causing the processor of a system, such as the one described below , to execute the steps of a method such as the one described above.

The computer program may be stored in physical storage media, such as recording media, computer memory, or read only memory, or may be carried by a carrier wave, such as an electrical or optical wave.

According to another aspect, it is provided a system for monitoring a product level in a container having a spherical bottom. This system may comprise:
- A sensor device of the product level in the container;
- A communications module for sending data related to at least one of the obtained product levels in the container to at least one external system through a communications network;
- A memory and a processor, wherein the memory stores computer program instructions executable by the processor, said instructions comprising functionalities for executing a method for monitoring a product level in a container, such as the one described above,
   wherein the sensor device is ultrasound-based and is arranged on a part of the spherical bottom of the container, and an element is arranged between the sensor device and the container, wherein said element is configured to cause a change of direction of the emission or reception beam of the signal from the ultrasound-based sensor.

As previously discussed, in some examples, the at least one external system may comprise a device associated with a user of the container. This device associated with the user may be a mobile device, such as a mobile phone (e.g. a smartphone) or a tablet, or may be any other device such as a personal computer, laptop, etc. In any case, this device may be configured to receive the data related to the product level for its processing. For this purpose, a computer program may be executed on the device associated with the user (in the case of mobile devices, this computer program may be an app), and said program may process the received data and produce a certain output. This output may be merely informative to the user (for example, the computer program may generate a graphical interface to show e.g. the product level in the container, a consumption history, consumption in real time, etc. to the user), or it may require a user intervention (through a graphical interface, the user may be indicated that it is necessary to generate a product order because the level is below a pre-established threshold). This graphical interface may comprise a control element (of e.g. button type) for the user to actuate on it and to accept the generation of the product order to the supplier/distributor); or it may be transparent to the user (the computer program itself may automatically generate the order when it is detected that the level is below the threshold).

According to some examples, the at least one external system may comprise a system of a supplier/distributor or a producer of the product.

The sensor device based on ultrasound emits a wave beam and measure the echo. Depending on the time between transmission and reception, it is possible to determine the product level in the container.

Furthermore, the sensor device of the product level in the container being ultrasound-based, the system comprises an element, which is arranged between the sensor device and the container, configured to change the direction of the emission/reception ultrasound beam. In this way, a drawback is eliminated which relates to a certain shape of the container storing the product (e.g. spherical) that may cause problems in measuring the product level in the container. This element is arranged between the sensor device and the container and may be of any type of material or liquid (e.g. a gel), as long as it causes the previously described change of direction of the ultrasound beam.

Furthermore, the system may comprise a sensor device of product leakage, from the container, for detecting possible leakage of product from the container and thus avoiding unwanted accidents. This device may be arranged inside or outside the monitoring system. In the latter case, the connection to the monitoring system may be performed in a wired or wireless manner. In the case of wired communication, it may be performed via serial ports, such as USB, micro USB, mini USB, Fire-wire or Ethernet or preferably through digital signals indicating the alarm status due to gas detection. If the communication is wireless, it may be a short range communication e.g. Bluetooth, NFC, Wi-Fi, IEEE 802.11 or Zigbee, although, due to energy consumption problems, the most efficient solution could be based on the use of an loT connection.

On the other hand, the system may also comprise a geo-positioning system of the container (for example, when the system is comprised in the container, i.e. when the system and the container constitute a single element). This geo-positioning system may be based on different techniques:
- assuming that data of the location of the user is known (which may be provided e.g. when the user is registered in the system via app, web, etc. or any other method), said data including the delivery address of the product and the identifier of each system for monitoring the product level in a container (e.g. the supplier/distributor of the product may have associated this identifier with the contract it has with the user, which also includes the address), every time that data related to the product level in the container are sent, the user identifier (i.e. the identifier of the monitoring system associated with the user) may also be sent. In this way, the distributor/supplier of the product may know the delivery address of the product or may associate the received data related to the product level with the user and the remaining of the stored data;
- the geo-positioning system may comprise a GPS (Global Positioning System). The main problem of this solution may be its significant energy consumption if currently known GPS are used;
- the geo-positioning of the loT network itself (although it is external to the system) allows through triangulation an approximate location although not in height in any case, so in principle it would not be possible to locate different users in the same building at different heights. It is therefore possible to associate a container to a location (e.g. a home) but in an indirect manner, i.e. the triangulation system of the loT network provides approximate positioning information which, correlated with that associated in the indirect manner, allows having a high degree of security of the actual location of the container, i.e. it may be useful for the distribution network (e.g. LPG distribution network) the correlation of the actual position provided by the loT network in relation to the sensor situation with the data of the theoretical location provided by the user or included in the contract with the distributor. When the loT device is permanently attached to the container, it may be logistically tracked from the filling centre, warehouse or point of sale, to the installation of the user.

In some examples, the system may further comprise a mechanical fastening system to the container, such as at least one neodymium magnet. In any case, these fastening means may depend on the material of which the container is made or the type of sensor provided in the monitoring system for measuring the product level since, in some cases, a base may also be required on which to place the cylinder. Thus, in the case that the mechanical fastening system to the container allows a removable fastening of the sensor device of the product level to the container, this sensor device may comprise or store user identification data of the container, such as the name of the physical/legal person, address, contract number, etc. In view of this configuration, it is assumed that the container is changed each time it is emptied, but the sensor device belongs to the same user, i.e. when the container is emptied, the sensor device is removed and fixed to a new container, so that it is efficient that the sensor device stores the user identification data.

If the mechanical fastening system of the sensor device does not allow for a removable fastening (i.e. the sensor device is fixedly fastened to the container or forms part thereof), this sensor device may comprise or store data of the container but not of the user, since the user may change over time, i.e. when the container is empty, it may be removed to be refilled, so that the container, once refilled, may be used by another user. The same may happen when the sensor device is part of the container itself (i.e. it is not an additional element to the container). In any case, the identification of the user who temporarily uses the container may be convenient. For this purpose, the user identification may be performed by radio frequency, such as through short-range wireless technologies, for example RFID or NFC.

According to some examples, the system may comprise a user operable element configured to generate and send a product purchase order to a system of a supplier/distributor of the product through the communications network. In this way, the user can at any time perform a product order to the supplier/distributor without the product level in the container being below the pre-established threshold, i.e. a purchase order may be generated without taking into account the product level in the container. Its use may be suitable for when, for example, the user foresees that he will make a continuous use of the product for a time.

It is also possible that with the actuation of the described element the user forces a measurement of the product level by the sensor device and sends data at that instant (or not, for example, if certain conditions are not met). If the user actuates e.g. twice on the described element in less than a few seconds, the monitoring system understands that the user wants to request a product order. Additionally, a further confirmation may be performed (for example, in response to a request from a system associated with the supplier/distributor of the product) by replying to an SMS, pop-up message in an app or a telephone call by the supplier/distributor. Thus, the function of this element of manual ordering is intended to be a quick and direct way of performing an order and the concept would be equivalent to a "panic button".

Other objects, advantages and features of embodiments of the invention will become apparent to those skilled in the art from the description, or may be learned from the practice of the invention.

### BRIEF DESCRIPTION OF THE DRAWINGS

Particular embodiments of the present invention will be described below by way of non-limiting examples, with reference to the accompanying drawings, in which:
Figure 1 shows a block diagram of a system for monitoring the product level in a container, according to some examples being part of the invention;
Figure 2 shows a schematic diagram of a system for monitoring the product level in a container, according to some examples being part of the invention;
Figure 3 shows a schematic diagram of a system for monitoring the product level in a container, such as the one of Figure 2, arranged in a container, according to some examples not part of the invention;
Figures 4a to 4c show different arrangements in the container of the sensor devices of the product level, according to examples not part of the invention;
Figures 4d and 4e show different arrangements in the container of the sensor device of the product level, according to some examples being part of the invention;
Figure 5 shows a schematic diagram of a system for monitoring the product level in a container in which the level sensor device comprised in the system is arranged in the bottom part of the container, according to some examples being part of the invention;

### DETAILED DESCRIPTION OF EXAMPLES

In the following a description of some examples is provided. Basically, a container can be, for example, a cylinder or a tank. In the case of a cylinder, the product stored by the cylinder may be pressurized liquid or liquefied gas, although it is not limited thereto. In the case of a tank, the stored product may be liquid, liquefied gas or pressurized liquid, but it is not limited thereto either. Thus, for example, among other possibilities, the container may be a domestic or industrial butane tank, a diesel fuel tank, a propane cylinder or tank, a butane tank or a tank or cylinder with a mixture of propane and butane. Even the container may be a barrel storing beer or any other product for human or animal consumption.

In the present examples, the container is a cylinder and the product stored in the cylinder is butane (in general, a LPG cylinder wherein LPG means Liquefied Petroleum Gas).

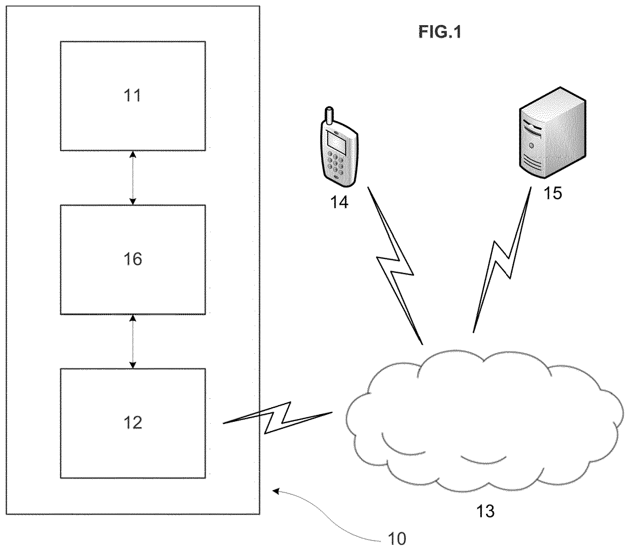

As may be seen in Figure 1, a system 10 for monitoring the butane level in the cylinder may comprise:
- A butane level sensor device 11 in the cylinder;
- A communications module 12 for sending data related to at least one of the butane levels obtained by the level sensor device 11 through a communications network 13 to at least one external system, such as a device 14 (e.g. a mobile device such as a smartphone or a tablet) associated with a user and/or a system 15 (e.g. a cloud-based server system) of a product supplier/distributor (in the present examples, a supplier/distributor of butane cylinders). The sending of this data can have several goals. Thus, for example, the objective may be at least one of the following (i.e. the data related to the obtained product level in the container comprises data for):
   - Informing the user of the butane level in the cylinder;
   - Informing the user of a low butane level in the cylinder for the user to determine whether it is necessary to perform an order of the product (in this case, a new butane cylinder);
   - Providing information to the supplier/distributor of the product on the consumption of the product by its customers. This information may be processed through "Big Data", to provide results that are useful for supplier/distributor companies, such as consumption maps per geographical area, correlation of consumption with weather, etc.
   - Performing a product order manually or automatically, either because the level obtained by the level sensor device 11 is below a threshold value or because the user has decided so, as will be explained below;
- A control module 16 comprising a memory and a processor (the memory may be arranged externally or in the processor itself), the memory storing instructions of a computer program executable by the processor, said instructions comprising functionalities for executing a method for monitoring the butane level in the cylinder, as will be described below;
- A module (not shown) for feeding the electronics of the monitoring system (e.g. batteries, photovoltaic cells, etc.)

The level sensor device 11, which is connected to the control module (more specifically, to the processor), may have different configurations.

Thus, the sensor device 11 is ultrasound-based, so that the sensor device emits a wave beam and measures the generated echo. Depending on the time between transmission and reception, the device can determine the product level (in the present examples, butane) remaining in the cylinder. For this aim, the level sensor device 11 may comprise an electronic board that generates the pulse emitted by the sensor and measures the rebound that is produced in the cylinder.

In addition, the ultrasonic-based sensor device 11 may pursue different objectives.

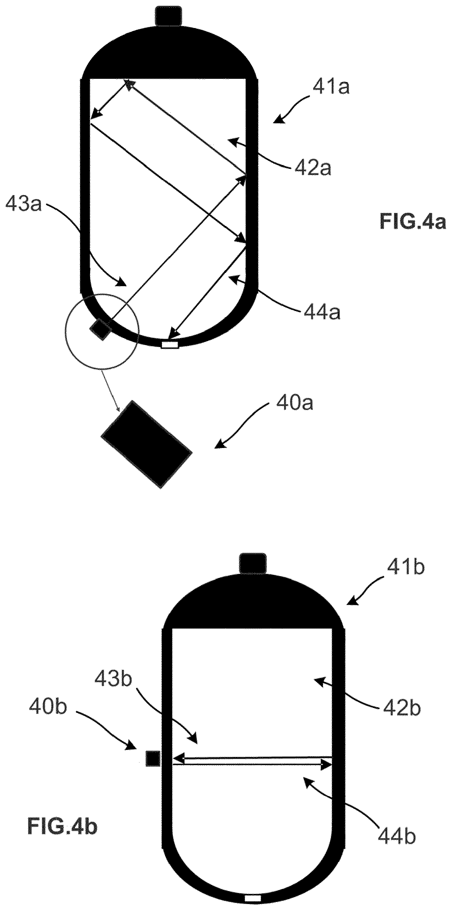

Figures 4a-4c disclose examples not part of the present invention.
Figure 4a shows a level sensor device 40a (that may be the sensor device 11 described above) arranged in a container 41a which has a spherical shape at its bottom part. This spherical shape causes that performing product level measurements 42a (e.g. butane) is problematic, as may be seen through the representation of the arrows shown in the figure. More specifically, the wave beam 43a emitted by the sensor device 40a is bounced by the container through the product and the wave beam 44a is not received by the sensor device 40a, so that the reading (or a reliable reading) of the product level in the container is not obtained.

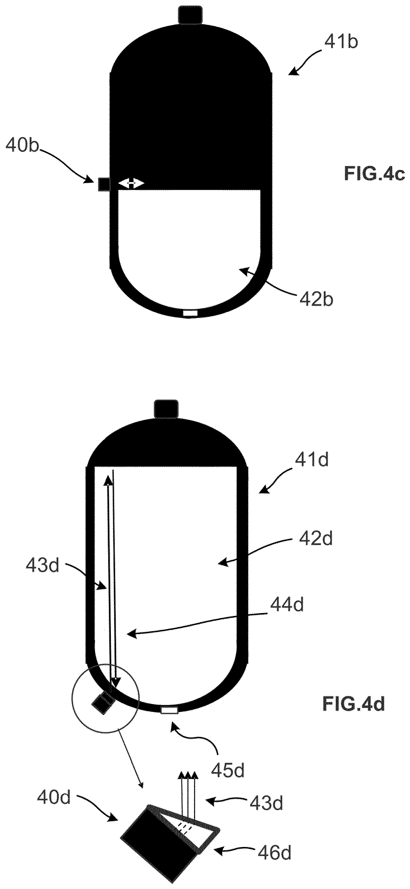

Because of this problem, a sensor device 40b may be arranged in the side wall of a container 41b so that it measures all or nothing. That is, with the arrangement of the sensor device in this position, it only detects whether the product level is above or below the position of the sensor device 40b, as may be seen in Figures 4b and 4c. In this case, an emitted wave beam 43b reaches, in the form of received wave beam 44b, the sensor device 40b, so that it may be determined whether there is product or not at the height (level) to which the sensor device is arranged. Figure 4b shows the situation in which the product level 42b is above the position of the sensor device, while in Figure 4c the product level is below the position of the sensor device on the lateral side of the container 41b. On the other hand, the sensor device 40b could be arranged at the bottom part of the lateral wall of the container so that the detection would be an indicator that the gas is running out.

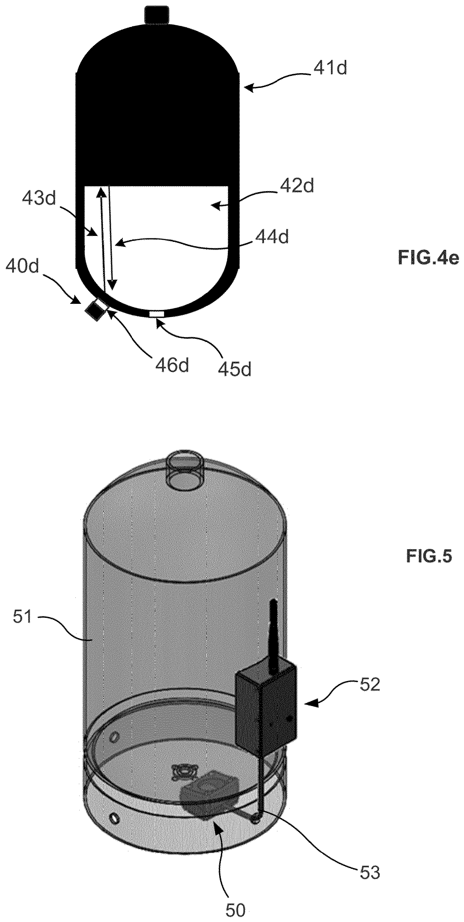

If it is desired to obtain (e.g. in real-time) the value of the product level 42d in a container 41d (i.e. a continuous measurement of the level), a sensor device 40d must be arranged at the bottom part of the container. The problem is that there is normally an irregular point 45d on this bottom part because it has a welding zone that makes it impossible to arrange the sensor device 40d in this position, which would be the optimal position to measure the value of the level. Thus, the sensor device 40d must be arranged slightly displaced with respect to this bottom point and, in order to avoid the problem described above based on Figure 4a, between the sensor device and the container, an element 46d is arranged which is configured to cause a change of direction of the emission 43d/reception 44d beam of the signal, as may be seen in Figures 4d and 4e. In these figures it is shown how a wave beam 43d is emitted by the sensor device through the product, and a wave beam 44d is received by the sensor device, thereby being able to determine the product level 42d in the container 41d (depending on the elapsed time between transmission and reception, the monitoring system -or the sensor device itself- can determine the product level). Thus, the spherical shape of the bottom part of the container is not a problem to perform the measurement.

At this point it is important to note that the design of the element 46d allows changing the angle of the emitted wave beam 43d so that the signal is as less damped as possible when passing through said element. This damping of the signal may be basically due to the fact that the element 46d, because of its shape and/or material, can absorb a significant part of the emitted wave beam and it is necessary to increase the emission signal for the received signal to be above the reception sensitivity level of the sensor device 40d. Therefore, the less the emission signal has to be increased the lower the energy consumption will be, thereby extending the life of the battery.

On the other hand, the element 46d may also have a configuration such as to absorb the different uniformities of manufacture and use of the different types of containers. For example, the same manufacturer may have containers of different shapes and designs, since these characteristics may change over the years and different models of containers may coexist.

Figure 5 shows an example of arrangement of a sensor device 50 at the bottom part of a container 51, as described above. In this example, this sensor device is located outside the housing of the monitoring system 52 of the product level in a container and is connected thereto through a wired connection 53 (e.g. a cable using the serial protocol).

In addition, the measurement of the butane level in the cylinder may be performed automatically (every certain time and/or more frequently when the level is below a threshold established for that aim) or the taking of the measurement of the product level in the container may be caused by a user intervention.

On the other hand, in the present examples, the communications network 13 used by or to which the communications module 12 is connected is a communications network for the Internet of Things (loT), which uses technology of low energy consumption and large coverage. The fact that its energy consumption is so small allows the system to operate for very long periods of time, without the need of recharging the batteries. This communications network may be selected from, for example, an loT network Sigfox, LoRA or NB-IoT.

The connection of the sensor device to one of these possible loT communications networks may be based, for example, depending on the type of network, in Ultra Narrow Band (UNB), or very narrow band communication, in Narrow Band (NB), or narrowband communication.

In the present examples, the communications network 13 is a Sigfox loT network, which is a free-to-air network that operates within the 868MHz band and is used for interconnecting loT devices. More specifically, Sigfox uses the "Ultra Narrow Band" (UNB), based on radio technology.

For this purpose, the communications module 12 may comprise a Sigfox transceiver which, for example, comprises the hardware and communication protocol required for its operation. In the present examples, this transceiver may be from the company Atmel, more specifically its model ATA8520D.

In relation to the computer program executed by the processor, it is stored in the described memory (for example, it may be stored in physical storage media, such as recording media, a computer memory, or a read only memory, or may be carried by a carrier wave, such as an electric or optical wave).

The computer program may be in the form of source code, object code or an intermediate code between source code and object code, such as in a partially compiled form, or in any other form suitable for use in the implementation of the described methods.

The carrier medium may be any entity or device capable of carrying the program.

For example, the carrier medium may comprise storage media, such as a ROM, for example a CD ROM or a semiconductor ROM, or a magnetic recording medium, for example a hard disk (for the present examples, it could be the solid state drive itself). In addition, the carrier medium may be a transmissible carrier medium such as an electrical or optical signal which may be transmitted via electrical or optical cable or by radio or other means.

When the computer program is contained in a signal which may be transmitted directly by a cable or other device or means, the carrier medium may be constituted by said cable or other device or means.

Alternatively, the carrier medium may be an integrated circuit in which the computer program is embedded, said integrated circuit being adapted for performing or for use in performing the relevant methods.

Also alternatively, the control module 16 may have a non-fully computing configuration as described above. Thus, its configuration may be purely electronic or an electronic and computer combination.

In the case that the control module 16 has a fully electronic configuration, this module may be formed by a programmable electronic device such as a CPLD (Complex Programmable Logic Device), an FPGA (Field Programmable Gate Array) or an ASIC (Application-Specific Integrated Circuit).

If the control module 16 has a combined computer and electronic configuration, it may comprise a memory and a processor, wherein the memory stores computer program instructions executable by the processor, said instructions comprising functionalities for executing at least part of a method for monitoring a product level in a container, as will be described later. In addition, the module may comprise electronic circuits designed to execute those parts of the method that are not implemented by the computer instructions.

Additionally, the monitoring system 10 may also comprise a sensor device of product leakage from the container (wherein, in the present examples, the product container is a butane cylinder). Thus, with the presence of this leak detection device, it is intended to minimize the possible accidents that can result from a leak of the product, since most of the products stored in the described types of containers may be highly flammable, highly explosive or highly harmful to human health or, basically, can pose security risks.

On the other hand, the monitoring system 10 may also comprise a geo-positioning system of the container. This geo-positioning system may be based on different techniques:
- assuming that data of the location of the user is known (which may be provided e.g. when the user is registered in the system via app, web, etc. or any other method), said data including the delivery address of the product and the identifier of each system for monitoring the product level in a container (e.g. the supplier/distributor of the product may have associated this identifier with the contract it has with the user, which also includes the address), every time that data related to the product level in the container are sent, the user identifier may also be sent. In this way, the distributor/supplier of the product may know the delivery address of the product or may associate the received data related to the product level with the user and the remaining of the stored data;
- the geo-positioning system may comprise a GPS (Global Positioning System). The main problem of this solution may be its significant energy consumption if currently known GPS are used;
- the geo-positioning of the loT network itself (although it is external to the system) allows through triangulation an approximate location although not in height in any case, so in principle it would not be possible to locate different users in the same building at different heights. It is therefore possible to associate a container to a location (e.g. a home) but in an indirect manner, i.e. the triangulation system of the loT network provides approximate positioning information which, correlated with that associated in the indirect manner, allows having a high degree of security of the actual location of the container, i.e. it may be useful for the distribution network (e.g. LPG distribution network) the correlation of the actual position provided by the loT network in relation to the sensor situation with the data of the theoretical location provided by the user or included in the contract with the distributor.

Additionally, the monitoring system 10 may comprise an element (for example a physical button or push-button, or a button or push-button generated on a user interface that may be displayed on a screen -e.g. LCD screen- included in the monitoring system) operable by a user and configured to generate and send a product purchase order to a system of a supplier/distributor of the product through the communications network. In this way, the user can at any time perform a product order to the supplier/distributor without the product level in the container being below the pre-established threshold, i.e. a purchase order may be generated without taking into account the product level in the container. Its use may be suitable when e.g. the user foresees that he/she will make a continuous use of the product for a time. A practical application of this situation is to perform orders quickly when the user has several home equipment (stove, heater, kitchen, etc.) which use butane or any other product autonomously but the user only has a single device for measuring the product level in the container.

It is also possible that with the actuation of the described element, the user forces a measurement of the product level by the sensor device and sends data at that instant (or not, if e.g. certain conditions are not met). If the user actuates e.g. twice on the described element in less than a few seconds, the monitoring system understands that the user wants to request a product order. Additionally, a further confirmation may be performed (for example, in response to a request from a system associated with the supplier/distributor of the product) by replying to an SMS, pop-up message in an app or a telephone call from the supplier/distributor. Thus, the function of this element of manual ordering is intended to be a quick and direct way of performing an order and the concept would be equivalent to a "panic button".

On the other hand, the presence of these devices and/or systems described up to now, i.e. the level sensor device 11, the leakage sensor device, the geo-positioning system or any other not described, may involve its connection to at least the communications module 12 (more specifically, to the processor) described above.

At this point it is important to note that some of these devices and/or systems may be arranged in the system or may be external to it. In the case of this latter scenario, the connection to the communications module 12 may be performed in a wired or wireless manner. In the case of wired communication, it may be performed via serial ports, such as USB, micro USB, mini USB, Fire-wire or Ethernet. In the case of wireless communication, the connection may be made using short-range wireless communications modules, e.g. Bluetooth, NFC, Wi-Fi, IEEE 802.11 or Zigbee, although they may present excessive energy consumption for the pursued purpose. If the communications are not long-range, the connection may be made via communications modules based on GSM, GPRS, 3G, 4G or satellite technology (for example, if the communication is performed via a global communications network, such as the Internet), although they also have an excessive energy consumption, or even through the loT communications network previously described.

With respect to the above-described external systems to which the data on butane level in the cylinder may be sent, they can basically be a device associated with the user (for example, a mobile device, such as a smartphone or a tablet, or a laptop or desktop computer), a system (usually computer system) associated with the butane distributor/supplier or a system (also usually computer system) associated with the producer of LPG cylinders.

In the first case, the data related to the butane level in the cylinder are received, in the present examples, by a user's mobile phone, which may display different interfaces to the user through an app configured for that. Thus, for example, it may display an interface indicating to the user data related to the performed consumption (these data may be generated by the app itself or may be given from the system of the supplier/distributor or the producer, as will be described below) or an interface indicating to the user that the butane level in the cylinder is below a threshold and that a purchase order for a new cylinder has automatically generated, or providing the user with the option of making this purchase order manually (for example, through a button-type control element shown on the interface).

In the second or third case, i.e. if the external system is a system associated with the supplier/distributor or the producer (e.g. a gas company), respectively, the data related to the butane level in the cylinder are received, in the present examples, by a computer system which can process them by an appropriate computer program through, for example, "Big Data" and thus provide results that are useful for both the supplier/distributor and the producer (even for the user), such as consumption maps per geographical area, correlation of consumption with weather, etc. In addition, these obtained results may be sent from the computer system of the supplier/distributor or producer to the mobile phone of the user.

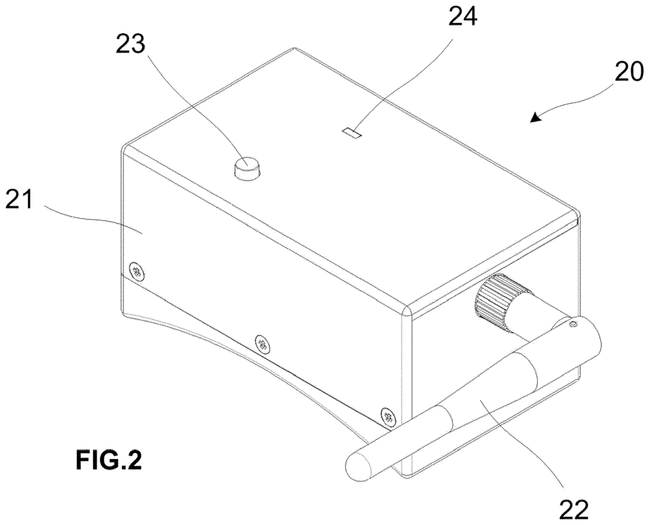

A schematic representation of a monitoring system 20 may be seen in Figure 2 (it could be the monitoring system 10 described above) according to some examples. In this representation, this monitoring system 20 comprises: a housing 21, within which all the elements described above may be found (although all or some of them could be arranged externally to the housing); an antenna 22, which is part of the communications module, for communicating the monitoring system 20 with external systems, via an loT communications network, as also described above; a button 23, also described above, for manually generating a product purchase order (for example, a new butane cylinder) when actuated by the user; and a light emitting diode (LED) 24 indicating the correct operation of the monitoring system 20 (for example, a green light could indicate correct operation, a red light could indicate malfunction, a blinking red light could indicate a disconnection of the system from the loT communications network, etc.). It is important to note that, for energy consumption reasons, the led 24 may normally be switched off and briefly flashing at the moment of sending automatic or manual information to the loT network (via the push-button included in the device).

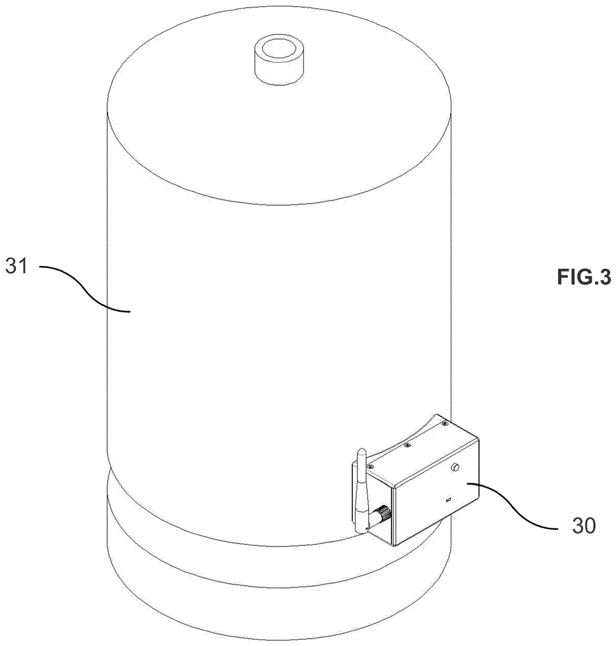

In Figure 3 a view is shown wherein a monitoring system 30 (that could be, for example, any of the monitoring systems 10, 20 described above) is arranged in a butane cylinder 31. The fastening of the system to the cylinder may be performed via mechanical fastening, e.g. through at least one neodymium magnet, although this fastening may depend on the material of which the cylinder is made.

On the basis of all that has been described so far, a description will now be provided of a method for monitoring a product level in a container (in the present examples, a butane cylinder), which will be executed by a computer program stored in the memory of the communications module 12, as described above.

Thus, the method may be as follows:
- Obtaining the product level in the container having a spherical bottom using a sensor device of the product level;
- Automatically sending data related to at least one of the obtained product levels in the container to at least one external system through a communications network, wherein the sensor device is ultrasound-based and is arranged on a part of the spherical bottom of the container, and an element is arranged between the sensor device and the container, wherein said element is configured to cause a change of direction of the emission or reception beam of the signal from the ultrasound-based sensor.

Obtaining the product level may be performed automatically or manually (for example, from user intervention). When performed automatically, this obtaining may be performed every certain time, may be performed at pre-established times, or may be performed more continuously once a level has been detected below a previously established threshold (this threshold has no relation with the established threshold from which a product order is recommended or performed).

With regard to automatic data transmission, it may be performed each time a reading of the product level is performed or only in those cases where, for example, a pre-established condition is fulfilled, such as when the level is below a pre-established threshold, to perform a product order.

In addition, this data transmission may be performed only to a system associated with the user, a system associated with the supplier/distributor or a system associated with the producer. It is also possible to send this data to more than one of the described external systems.

On the other hand, the sending may be performed to the different systems when different situations occur. For example, each time a reading of the level is performed, data related to the reading may be sent to the system of the producer and/or to the system of the supplier/distributor, for their processing.

However, the user system only receives data when the obtained product level in the container is below a pre-established threshold, so that, for example, a product order is performed either manually (which requires user participation) or automatically.

The method may further comprise:
- Determining whether the obtained product level in the container is below a pre-established threshold value;
wherein automatically sending data related to at least one of the obtained product levels in the container to at least one external system through a communications network comprises:
- Automatically sending data related to the obtained product level in the container to the at least one external system through the communications network when the product level in the container is determined to be below the pre-established threshold.

That is, as discussed above, if the level is below a threshold, the data associated with the level is sent to one of the described systems.

In any case, the data related to the level may have, for example, two formats:
- The obtained product level in the container (in the present examples, the butane level in the cylinder). In this case, the external system that receives these data may be the system that determines whether the level is below the pre-established threshold to perform a product order;
- A product purchase order to a supplier/distributor. In this case, the monitoring system itself is the system that performs the verification to determine whether the obtained level is below this threshold.

In addition, the sending of this data may be accompanied by the sending of the user's identifier (that is, the identifier of the monitoring system associated with the user) to the supplier/distributor company. It is important to note that the amount of data that may be sent in an loT network is so small that information such as the location or address of the user cannot be sent. The sending of this identifier, which the supplier/distributor company has already associated with the other data of the user, is sufficient.

At this point it is important to note that if the container is a cylinder for storing pressurized liquid or liquefied gas, the data related to a product purchase order to a supplier/distributor may comprise a purchase order of at least one cylinder storing pressurized liquid or liquefied gas. That is, the product order is the ordering of a new cylinder.

Conversely, if the container is a tank for storing liquid, liquefied gas or pressurized liquid, the data related to a product purchase order to a supplier/distributor may comprise a purchase order of liquid, liquefied gas or pressurized liquid stored by the tank. That is, it is not necessary to order a new tank, but a product is ordered to fill this tank.

While only certain embodiments and particular examples of the invention have been described herein, one skilled in the art will appreciate that other alternative embodiments and/or uses of the invention are possible, as well as obvious modifications and equivalent elements. In addition, the present invention covers all the possible combinations of the particular embodiments which have been described. The scope of the present invention should not be limited to specific embodiments, but it must be determined only by a fair reading of the appended claims.

## Claims

1. Method for monitoring a product level in a container having a spherical bottom, comprising:
- Obtaining the product level in the container using a sensor device of the product level;
- Automatically sending data related to at least one of the obtained product levels in the container to at least one external system through a communications network,
wherein the sensor device is ultrasound-based and is arranged on a part of the spherical bottom of the container, and an element (46d) is arranged between the sensor device and the container, wherein said element is configured to cause a change of direction of the emission (43d) or reception (44d) beam of the signal from the ultrasound-based sensor.

2. Method according to claim 1, further comprising:
- Determining whether the obtained product level in the container is below a pre-established threshold value;
wherein automatically sending data related to at least one of the obtained product levels in the container to at least one external system through a communications network comprises:
- Automatically sending data related to the obtained product level in the container to the at least one external system through the communications network when the product level in the container is determined to be below the pre-established threshold.

3. Method according to claim 2, wherein the data related to the obtained product level in the container comprise data related to a product purchase order to a supplier/distributor.

4. Method according to claim 3, wherein the container is a cylinder for storing pressurized liquid or liquefied gas and wherein the data related to a product purchase order to a supplier/distributor comprise a purchase order of at least one cylinder storing pressurized liquid or liquefied gas.

5. Method according to claim 3, wherein the container is a tank for storing liquid, liquefied gas or pressurized liquid, and wherein the data related to a product purchase order to a supplier/distributor comprise a purchase order of liquid, liquefied gas or pressurized liquid storable by the tank.

6. Method according to any one of claims 1 to 5, wherein the communications network is a communications network for the Internet of Things.

7. A system for monitoring a product level in a container having a spherical bottom, comprising:
- A sensor device (11, 40d, 50) of the product level in the container;
- A communications module (12) for sending data related to at least one of the obtained product levels in the container to at least one external system through a communications network;
- A memory and a processor, wherein the memory stores computer program instructions executable by the processor, these instructions comprising functionalities for executing a method according to any one of claims 1 to 6 for monitoring a product level in a container;
- an element (46d) configured to be arranged between the sensor device (11, 40d, 50) and the container, wherein the sensor device (11, 40d, 50) is ultrasound-based and is configured to be arranged on a part of the spherical bottom of the container, and wherein said element (46d) is configured to cause a change of direction of the emission (43d) or reception (44d) beam of the signal from the ultrasound-based sensor.

8. System according to claim 7, wherein the at least one external system comprises a device associated with a user of the container.

9. System according to any one of claims 7 or 8, wherein the at least one external system comprises a system of a supplier/distributor/producer of the product.

10. System according to any one of claims 7 to 9, further comprising a product leak sensor device, of the container.

11. System according to any one of claims 7 to 10, further comprising a geo-positioning system of the container.

12. System according to claim 11, further comprising a device for obtaining data of a user of the container.

13. System according to any one of claims 7 to 12, further comprising a user operable element configured to generate and send a product purchase order to a system of a supplier/distributor of the product through the communications network.

14. Computer program comprising program instructions for causing the processor of a system according to any one of claims 7 - 13 to execute the steps of a method according to any one of claims 1 - 6.

## Patentansprüche

1. Verfahren zur Überwachung eines Produktfüllstands eines Behälters, der einen sphärischen Boden hat, umfassend:
- Erfassen des Produktfüllstands des Behälters unter Verwendung von einer Produktfüllstandsensorvorrichtung;
- Automatisches Senden von Daten, die sich auf mindestens einen der erfassten Produktfüllstände des Behälters beziehen, an mindestens ein externes System über ein Kommunikationsnetzwerk,
wobei die Sensorvorrichtung auf Ultraschall basiert und auf einem Teil des sphärischen Bodens des Behälters angeordnet ist und ein Element (46d) zwischen der Sensorvorrichtung und dem Behälter angeordnet ist, wobei das Element konfiguriert ist, um eine Änderung der Richtung des Emissionsstrahls (43d) oder des Empfangsstrahls (44d) des Signals aus dem auf Ultraschall basierten Sensor hervorzurufen.

2. Verfahren nach Anspruch 1 weiterhin umfassend:
- Bestimmen, ob der erfasste Produktfüllstand des Behälters unter einem vorab festgelegten Schwellenwert liegt;
wobei das automatische Senden von Daten, die sich auf mindestens einen der erfasst Produktstände des Behälters beziehen, an mindestens ein externes System über ein Kommunikationsnetzwerk folgendes umfasst:
- Automatisches Senden von Daten bezüglich des erfassten Produktfüllstands des Behälters an das mindestens eine externe System über das Kommunikationsnetzwerk, wenn festgestellt wird, dass der Produktfüllstand des Behälters unter dem vorab festgelegten Schwellenwert liegt.

3. Verfahren nach Anspruch 2, wobei die Daten bezüglich des erfassten Produktfüllstands des Behälters Daten bezüglich einer an einen Lieferanten/Händler abgegebenen Produktbestellung umfassen.

4. Verfahren nach Anspruch 3, wobei der Behälter ein Zylinder zum Speichern von unter Druck stehender Flüssigkeit oder verflüssigtem Gas ist und wobei die Daten bezüglich einer an einen Lieferanten/Händler abgegebenen Produktbestellung eine Bestellung von mindestens einem Zylinder umfassen, in dem unter Druck stehende Flüssigkeit oder verflüssigtes Gas gespeichert ist.

5. Verfahren nach Anspruch 3, wobei der Behälter ein Tank zum Speichern von Flüssigkeit, verflüssigtem Gas oder unter Druck stehender Flüssigkeit ist, und wobei die Daten bezüglich einer an einen Lieferanten/Händler abgegebenen Produktbestellung eine Bestellung von Flüssigkeit, verflüssigtem Gas oder unter Druck stehender Flüssigkeit umfassen, die im Tank gespeichert werden können.

6. Verfahren nach einem der Ansprüche 1 bis 5, wobei das Kommunikationsnetzwerk ein Kommunikationsnetzwerk für das Internet der Dinge ist.

7. Ein System zur Überwachung eines Produktfüllstands eines Behälters, der einen sphärischen Boden hat, umfassend:
- Eine Sensorvorrichtung (11, 40d, 50) des Produktfüllstands des Behälters;
- Ein Kommunikationsmodul (12) zum Senden von Daten, die sich auf mindestens einen der erfassten Produktstände des Behälters beziehen, an mindestens ein externes System über ein Kommunikationsnetzwerk;
- Einen Speicher und einen Prozessor, wobei der Speicher Computerprogrammanweisungen speichert, die durch den Prozessor ausführbar sind, wobei diese Anweisungen Funktionalitäten zum Ausführen eines Verfahrens nach einem der Ansprüche 1 bis 6 zur Überwachung von einem Produktfüllstand in einem Behälter umfassen;
- ein Element (46d), das konfiguriert ist, um zwischen der Sensorvorrichtung (11, 40d, 50) und dem Behälter angeordnet zu werden,
wobei die Sensorvorrichtung (11, 40d, 50) auf Ultraschall basiert und konfiguriert ist, um auf einem Teil des sphärischen Bodens des Behälters angeordnet zu werden, und wobei das Element (46d) konfiguriert ist, um eine Änderung der Richtung des Emissionsstrahls (43d) oder des Empfangsstrahls (44d) des Signals aus dem auf Ultraschall basierten Sensor hervorzurufen.

8. System nach Anspruch 7, wobei das mindestens eine externe System eine Vorrichtung umfasst, die einem Benutzer des Behälters zugeordnet ist.

9. System nach einem der Ansprüche 7 oder 8, wobei das mindestens eine externe System ein System eines Lieferanten/Händlers/Herstellers des Produkts umfasst.

10. System nach einem der Ansprüche 7 bis 9, weiterhin umfassend eine Produktlecksensorvorrichtung des Behälters.

11. System nach einem der Ansprüche 7 bis 10, weiterhin umfassend ein Geopositionierungssystem des Behälters.

12. System nach Anspruch 11, weiterhin umfassend eine Vorrichtung zur Gewinnung von Daten eines Benutzers des Behälters.

13. System nach einem der Ansprüche 7 bis 12, weiterhin umfassend ein von einem Benutzer betreibbares Element, das konfiguriert ist, um eine Produktbestellung zu erzeugen und über das Kommunikationsnetzwerk an ein System eines Lieferanten/Vertreibers des Produkts zu senden.

14. Computerprogramm umfassend Programmanweisungen zum Veranlassen der Ausführung der Schritte eines Verfahren nach einem der Ansprüche 1 bis 6 durch den Prozessor von einem System nach einem der Ansprüche 7 bis 13.

## Revendications

1. Procédé de surveillance d'un niveau de produit dans un conteneur ayant un fond sphérique, comprenant :
- obtenir le niveau de produit dans le conteneur à l'aide d'un dispositif capteur du niveau de produit ;
- envoyer automatiquement des données relatives à au moins l'un des niveaux de produit obtenus du conteneur à au moins un système externe via un réseau de communications,
dans lequel le dispositif capteur est basé sur des ultrasons et est disposé sur une partie du fond sphérique du conteneur, et un élément (46d) est disposé entre le dispositif capteur et le conteneur, dans lequel ledit élément est configuré pour entrainer un changement de direction du faisceau d'émission (43d) ou de réception (44d) du signal du capteur basé sur des ultrasons.

2. Procédé selon la revendication 1, comprenant en outre :
- Déterminer si le niveau de produit obtenu du conteneur est inférieur à une valeur seuil préétablie ;
dans lequel l'envoi automatique de données relatives à au moins l'un des niveaux de produit obtenus du conteneur à au moins un système externe via un réseau de communications comprend :
- Envoyer automatiquement des données relatives au niveau de produit obtenu du conteneur à l'au moins un système externe via le réseau de communications lorsqu'on détermine que le niveau de produit du conteneur est inférieur à la valeur seuil préétablie.

3. Procédé selon la revendication 2, dans lequel les données relatives au niveau de produit obtenu du conteneur comprennent des données relatives à une commande de produit passée à un fournisseur/distributeur.

4. Procédé selon la revendication 3, dans lequel le conteneur est un cylindre pour stocker du liquide sous pression ou du gaz liquéfié et dans lequel les données relatives à une commande de produit passée à un fournisseur/distributeur comprennent une commande d'au moins un cylindre stockant du liquide sous pression ou du gaz liquéfié.

5. Procédé selon la revendication 3, dans lequel le conteneur est un réservoir de stockage de liquide, de gaz liquéfié ou de liquide sous pression, et dans lequel les données relatives à une commande de produit passée à un fournisseur/distributeur comprennent un ordre d'achat de liquide, de gaz liquéfié ou de liquide sous pression stockable dans le réservoir.

6. Procédé selon l'une quelconque des revendications 1 à 5, dans lequel le réseau de communications est un réseau de communications pour l'Internet des objets.

7. Un système de surveillance d'un niveau de produit dans un conteneur ayant un fond sphérique, comprenant :
- Un dispositif capteur (11, 40d, 50) du niveau de produit dans le conteneur :
- Un module de communications (12) pour envoyer des données relatives à au moins un des niveaux de produit obtenus du conteneur à au moins un système externe via un réseau de communications ;
- Une mémoire et un processeur, dans lequel la mémoire stocke des instructions de programme informatique exécutables par le processeur, ces instructions comprenant des fonctionnalités d'exécution d'un procédé selon l'une quelconque des revendications 1 à 6 pour surveiller un niveau de produit dans un conteneur ;
- un élément (46d) configuré pour être disposé entre le dispositif capteur (11, 40d, 50) et le conteneur,
dans lequel le dispositif capteur (11, 40d, 50) est basé sur des ultrasons et est configuré pour être disposé sur une partie du fond sphérique du conteneur, et dans lequel ledit élément (46d) est configuré pour entrainer un changement de direction du faisceau d'émission (43d) ou de réception (44d) du signal du capteur basé sur des ultrasons.

8. Système selon la revendication 7, dans lequel l'au moins un système externe comprend un dispositif associé à un utilisateur du conteneur.

9. Système selon l'une quelconque des revendications 7 ou 8, dans lequel l'au moins un système externe comprend un système d'un fournisseur/distributeur/producteur du produit.

10. Système selon l'une quelconque des revendications 7 à 9, comprenant en outre un dispositif de détection de fuites de produit du conteneur.

11. Système selon l'une quelconque des revendications 7 à 10, comprenant en outre un système de géolocalisation du conteneur.

12. Système selon la revendication 11, comprenant en outre un dispositif pour obtenir des données d'un utilisateur du conteneur.

13. Système selon l'une quelconque des revendications 7 à 12, comprenant en outre un élément manœuvrable par l'utilisateur configuré pour générer et envoyer une commande de produit à un système d'un fournisseur/distributeur du produit via le réseau de communications.

14. Programme informatique comprenant des instructions de programme pour entrainer l'exécution des étapes d'un procédé selon l'une quelconque des revendications 1 à 6 par le processeur d'un système selon l'une quelconque des revendications 7 à 13.
